Europäisches Patentamt

European Patent Office

Office européen des brevets

(19)

(11) **EP 0 714 853 A1**

(12) **EUROPEAN PATENT APPLICATION**

(43) Date of publication:
05.06.1996 Bulletin 1996/23

(51) Int. Cl.$^6$: **C01F 7/47**

(21) Application number: 94118571.2

(22) Date of filing: 25.11.1994

(84) Designated Contracting States:
DE ES FR GB GR IE IT

(71) Applicant: **ALUMINUM COMPANY OF AMERICA**
Alcoa Center, Pennsylvania 15069-0001 (US)

(72) Inventors:
• Phillips, Richard B.
Little Rock, Arkansas, 72212 (US)

• Fitzgerald, Nancy M.
Pittsburgh, Pennsylvania 15221 (US)
• McCormick, Bennett L.
Cheswick, Pennsylvania 15024 (US)

(74) Representative: **Baillie, Iain Cameron**
c/o Ladas & Parry
Altheimer Eck 2
80331 München (DE)

(54) **Method for improving the brightness of aluminium hydroxide**

(57)     A method (Fig. 1a) for improving the brightness level of aluminum hydroxide removed from a caustic solution comprises contacting the solution with an adsorbent comprising a calcined compound having the formula: $A_wB_x(OH)_yC_z \cdot nH_2O$ wherein A represents a divalent metal cation selected from the group consisting of: $Mg^{2+}$, $Ni^{2+}$, $Fe^{2+}$, $Ca^{2+}$ and $Zn^{2+}$; B represents a trivalent metal cation selected from the group consisting of: $Al^{3+}$, $Fe^{3+}$ and $Cu^{3+}$; C represents a mono- to tetravalent anion selected from the group consisting of: $OH^-$, $Cl^-$, $Br^-$, $NO_3^-$, $CH_3COO^-$, $C_2O_4^{2-}$, $CO_3^{2-}$, $SO_4^{2-}$, $PO_4^{3-}$, $Fe(CN)_6^{3-}$ and $Fe(CN)_6^{4-}$; and w, x, y, z and n satisfy the following: $0 < z \leq x \leq 4 \leq w \leq \frac{1}{2} y$ and $12 \geq n \geq \frac{1}{2}(w-x)$; and filtering the solution before and/or after said contacting. A preferred adsorbent comprises calcined hydrotalcite. An improved aluminum hydroxide product having a whiteness level of 85% or higher based on a 100% $TiO_2$ reference standard, having been removed from a caustic solution and decolorized by the foregoing method, is obtained.

FIGURE 1a

## Description

This invention relates to the purification of caustic liquors and high caustic streams, especially those relating to the production of aluminum hydroxides (also called alumina trihydrates) and aluminas from bauxite according to the Bayer process (sometimes referred to as Bayer liquor streams). The invention further relates to means for making an intermediate grade aluminum hydroxide/hydrate product in terms of brightness, i.e., having a whiteness level of about 85% or higher, more preferably about 90 or 92% whiteness, based on a 100% $TiO_2$ standard and a target adsorbence level of about 0.20. For purposes of this invention, the terms "brightness" and "whiteness" are used interchangeably.

The recovery of aluminum hydroxide from bauxite according to the Bayer process is achieved by digesting hydroxide-containing ores with a caustic liquor. A major portion of alumina dissolves in this liquor while most unwanted ore constituents, sometimes called "red mud", remain undissolved. After bauxite is pressure digested with a caustic such as sodium hydroxide, red mud may be removed from this liquor. Aluminum hydroxide is then separated from a liquor of supersaturated sodium aluminate, also known as "green" or "pregnant" liquor, typically by precipitation. During such precipitation, the supersaturated sodium aluminate is cooled and mixed with a slurry of aluminum hydroxide particles acting as seed material, or seed stock, to induce the formation of more aluminum hydroxide. After precipitation, the slurry is pumped through a classifier system where a coarse fraction of crystallized aluminum hydroxide is separated from the liquor. The fine fractions of crystallized (or precipitated) aluminum hydroxide are further classified into two finer fractions called "secondary seed" and "tray seed", the latter being the finest fraction from this classifier system. These secondary and tray seeds are often recycled to a precipitator to act as seed for further aluminum hydroxide precipitation. The resulting spent sodium aluminate may be recycled to a digester for mixing with new (or incoming) bauxite.

Sodium aluminate liquors can also be made by digesting precipitated aluminum hydroxide (primary), secondary seed, tray seed or combinations thereof in a method known as redigestion. Some Bayer plants produce excess seed (generally tray seed) which they may thereafter redigest by recycling to bauxite digesters or through a separate, specially designed digester.

High levels of impurities are undesirable in the sodium aluminate liquor used to make aluminum hydroxide because such impurities decrease the whiteness or color purity of the hydroxide/hydrate precipitated therefrom. It is desirable, therefore, to minimize the presence of such impurities in green sodium aluminate liquors before crystallization takes place. Such impurities typically cause the aluminum hydroxide produced to have a whiteness level of about 75% or less based on a 100% $TiO_2$ standard thus prohibiting their use in many applications where generally higher brightness levels (about 80% or above) are required. The present invention produces aluminum hydroxide having whiteness levels of about 85% or more based on the same 100% $TiO_2$ reference standard. For some embodiments, whiteness levels of about 90 or 92% are achieved consistently.

When organic and inorganic impurities are present, lower liquor productivity and reduced alumina purity result. Organic impurities may cause such other complications as: lower alumina yields; excessively fine hydroxide particles; the production of colored liquors and aluminum hydroxide; lower red mud settling rates; caustic losses due to sodium organic formation; an increase in liquor density; increased viscosities; higher boiling points; and unwanted liquor foaming.

Numerous methods are known for removing colorants from a sodium aluminate liquor. These include Australian Patent No. 12085/83 which teaches treating liquors with reactive MgO or $Mg(OH)_2$ before calcining at 900°C. or more. Schepers et al. U.S. Patent No. 4,046,855 also discloses treating aluminate liquors with a magnesium compound to remove organic colorants therefrom. Japanese Patent No. 57-31527 produces an aluminum hydroxide of high purity by adding one or more alkaline earth metal compounds to such solutions. Representative additives include oxides, hydroxides, carbonates, silicates and nitrates of magnesium or calcium; and barium carbonates, silicates, nitrates or sulfates.

German Patent No. 3,501,350 discloses adding a mixture of calcium oxide/hydroxide and kierserite ($MgSO_4 \cdot H_2O$) to Bayer liquors for lowering impurity levels, especially iron contents. In Goheen et al. U.S. Patent No. 4,915,930, an aluminum hydroxide of improved whiteness is produced by contacting liquor streams with a mixture of tricalcium aluminate and unactivated hydrotalcite. Finally, in Nigro U.S. Patent No. 5,068,095, caustic solutions are treated with calcined hydrotalcite to remove colorants, especially iron. High dosages of about 10 g/l were preferred to make hydroxide/hydrates with about 80% whiteness levels or higher. The present invention represents an improvement over the aforementioned Nigro et al. method.

It would be desirable to provide uncomplicated means for removing ionic colorants and contaminants from caustics including sodium hydroxide and sodium aluminate; to provide means for improving the whiteness/brightness levels of aluminum hydroxide with reduced product loss; to provide a low cost, low capital means for removing greater amounts of color contaminants from sodium aluminate liquors; to provide means for treating sodium aluminate liquors to produce a powder with whiteness levels consistently over 85% based on a 100% $TiO_2$ standard; to produce hydrates which are higher in brightness than the roughly 65-75% whiteness levels associated with A-30 alumina hydrate as sold by Alcoa of Australia, while being less expensive to produce than Alcoa's significantly whiter (about 96%) C-31 hydrate.

It also would be desirable to provide improved chemical grade hydrates with lower insoluble contents for the zeolite, alum and sodium aluminate markets; and to overcome the problems and disadvantages of the prior treatment methods described above.

The majority of brightness measurements described herein were taken using a Technidyne Brightimeter model S-4 maintained annually per Technical Association of Pulp & Paper Industry (or TAPPI) requirements and calibrated with purchased standards. Hydrate color by absorbance was measured on a filtered 13.3% caustic solution of hydrated alumina prepared in a Parr bomb at 140 ±5°C. for 2 hours. The solution was protected from exposure to light. Light absorbance values were then measured on a Bausch & Lomb Spectronic 2000 Spectrophotometer at 450 nm in a 10 cm cell as corrected against a blank caustic solution.

In accordance with the foregoing, there is provided a method for improving the brightness level of aluminum hydroxide or hydrate removed from a caustic solution, typically of redigested aluminum hydrate, supersaturated sodium aluminate or a Bayer liquor stream. One preferred embodiment of this method comprises: (a) filtering the solution to remove contaminants, typically those which are 50 microns or less in size; (b) contacting this filtered solution with an adsorbent consisting essentially of a calcined compound having the formula $A_wB_x(OH)_yC_z \cdot nH_2O$ wherein A represents a divalent metal cation selected from the group consisting of: $Mg^{2+}$, $Ni^{2+}$, $Fe^{2+}$, $Ca^{2+}$ and $Zn^{2+}$; B represents a trivalent metal cation selected from the group consisting of: $Al^{3+}$, $Fe^{3+}$ and $Cu^{3+}$; C represents a mono- to tetravalent anion selected from the group consisting of: $OH^-$, $Cl^-$, $Br^-$, $NO_3^-$, $CH_3COO^-$, $C_2O_4^{2-}$, $CO_3^{2-}$, $SO_4^{2-}$, $PO_4^{3-}$, $Fe(CN)_6^{3-}$ and $Fe(CN)_6^{4-}$; and w, x, y, z and n satisfy the following: $0 < z \leq x \leq 4 \leq w \leq \frac{1}{2} y$ and $12 \geq n \geq \frac{1}{2}(w - x)$: followed by (c) adsorbing additional contaminants onto this calcined compound. On a preferred basis, the foregoing method further includes: (d) separating or filtering contacted compound and additional contaminants from the solution after step (c). Yet another preferred step adds to the solution as seed material an aluminum hydroxide of high brightness, preferably about 85% or higher based on a 100% $TiO_2$ reference standard. In some instances, this seed may be a fine classified fraction of the aluminum hydroxide produced during above step (d). Optional method steps include: (i) recalcining contacted compound separated from the solution in step (d); and (ii) contacting this recalcined compound with additional solution thereby recycling said adsorbent for enhanced efficiencies. The adsorbent in step (b) preferably consists essentially of calcined or activated hydrotalcite (sometimes abbreviated as "Activ. HTC" in the accompanying FIGURES and TABLES). This product is delivered to a caustic stream in preferred dosages of 1.0 g/l or less, more preferably about 0.3 g/l or less, even as low as about 0.1 g/l or less, for total treatment times of about 15-30 minutes or less. The invention further provides aluminum hydroxide of improved whiteness, about 85% or higher based on a 100% $TiO_2$ reference standard.

Further features, objectives and advantages of the present invention will become clearer from the following detailed description of preferred embodiments made with reference to the drawings in which:

FIGURE 1a is a flow chart depicting one embodiment for making improved aluminum hydroxide according to the invention, said embodiment including contacting sodium aluminate liquor with an activated hydrotalcite adsorbent prior to filtration (the optional steps of this embodiment being depicted in dashed boxes);

FIGURE 1b is a flow chart of a second embodiment which filters redigested tray seed liquor after contact with activated hydrotalcite;

FIGURE 1c is a flow chart depicting a third embodiment of this invention which filters a liquor stream both before and after contact with activated hydrotalcite adsorbent;

FIGURE 2a is a flow chart which depicts the quantitative improvement in whiteness achieved when treating caustic liquors prepared at atmospheric pressure according to the invention;

FIGURE 2b is a flow chart depicting the quantitative improvement in whiteness achieved when such liquors have been subjected to a simulated pressure (or "bomb") digestion; and

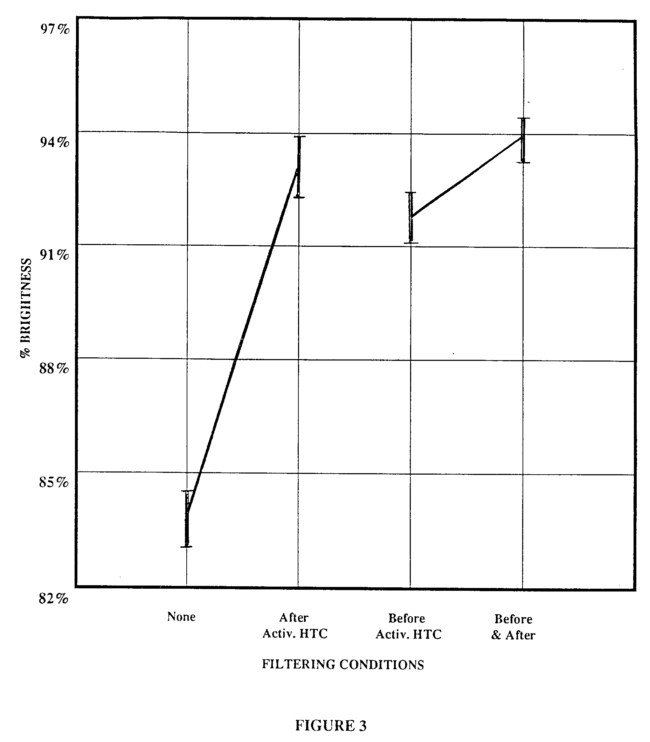

FIGURE 3 is a graph comparing the average brightness levels achieved (y-axis) under various filtering conditions (x-axis).

In this description of preferred embodiments, repeated reference is made to the treatment of sodium aluminate liquors using filtration steps before and/or after contact with sufficient amounts of calcined or activated hydrotalcite. The invention should be understood to apply to still other caustic streams, however, including NaOH and the liquor solutions known to result from certain paper processing techniques. While activated hydrotalcite is the preferred adsorbent used in combination with filtering, the invention may employ still other metal hydroxides belonging to the structural family having the formula:

$A_wB_x(OH)_yC_z \cdot nH_2O$, wherein A represents a divalent metal cation, B a trivalent metal cation, C a mono-to tetravalent anion, and w, x, y, z and n satisfy the following: $0 < z \leq z \leq x \leq 4 \leq w \leq \frac{1}{2} y$ and $12 \leq n \leq \frac{1}{2}(w-x)$. Preferred members of this family have often been identified by the formula:

$A_6B_2(OH)_{16}C_z \cdot 4H_2O$, wherein A is: $Mg^{2+}$, $Ni^{2+}$, $Fe^{2+}$, $Ca^{2+}$ and/or $Zn^{2+}$; B is: $Al^{3+}$, $Fe^{3+}$ and/or $Cr^{3+}$; and C is one or more anions selected from the list which includes: $OH^-$, $Cl^-$, $Br^-$, $NO_3^-$, $CH_3COO^-$, $C_2O_4^{2-}$, $CO_3^{2-}$, $SO_4^{2-}$, $PO_4^{3-}$, $Fe(CN)_6^{3-}$ and $Fe(CN)_6^{4-}$ with $\frac{1}{2} \leq z \leq 2$ depending on the anionic charge being substituted. Some publications collectively describe many of these foregoing compounds as hydrotalcites. For purposes of this invention, though, such compounds have been divided into various subgroups depending on the divalent and trivalent cations within their alternating brucite-like layers. For example, pyroaurites (or "sjogrenites") have the basic formula:

$Mg_6Fe_2OH_{16}CO_3 \cdot 4H_2O$. Takovites, on the other hand, include compounds resembling: $Ni_6Al_2OH_{16}CO_3 \cdot 4H_2O$.

Another definition for the term "hydrotalcite" includes any natural or synthetic compound satisfying the formula: $Mg_6Al_2OH_{16}CO_3 \cdot 4H_2O$. This is sometimes rewritten as $6MgO \cdot Al_2O_3 \cdot CO_2 \cdot 12H_2O$. In its ionic form, hydrotalcite appears as: $[Mg_6Al_2(OH)_{16}]^{2+}[CO_3]^{2-} \cdot 4H_2O$. The main structural unit for this compound is brucite, or magnesium hydroxide, in an octagonal sheet-like form, with Mg ions positioned between multiple (OH) ions which share a common edge. By substituting trivalent aluminum for some of the magnesium in this structure, sublayers of magnesium and aluminum are created while still maintaining brucite's basic sheet-like structure. To compensate for the charge imbalance from such aluminum ion substitutions, anions (indicated by letter "C" in the foregoing formulae) and water molecules are intercalated to form interlayers of $(C_z \cdot nH_2O)$ between such brucite-like layers. The anion with the greatest affinity to combine with water and form hydrotalcite is carbonate $(CO_3^{2-})$.

The spacial distribution of carbonate ions within hydrotalcite can vary depending on how freely $Al^{3+}$ ions substitute from the $Mg^{2+}$ ions therein. Brucite layer spacing also depends on the amount of aluminum substituted into hydrotalcite's basic structure. As aluminum substitution increases, interlayer spacing generally decreases due to an increase in the electrostatic attraction between the positive hydroxide layers and negative interlayers of hydrotalcite. Interlayer thicknesses may vary still further with the size and orientation of those anions substituted for carbonate in the basic structure of hydrotalcite.

Natural deposits of hydrotalcites have been found in Snarum, Norway and the Ural Mountains. Typical occurrences are in the form of serpentines, talc schists, or as a spinel pseudomorph. Like most ores, natural hydrotalcite is virtually impossible to find in a pure state. Natural deposits typically contain one or more other minerals including penninite and muscovite.

Several methods for making synthetic hydrotalcite are known. The more common approaches produce hydrotalcite as a fine powder, in -20 mesh granules, or as 1/8 inch diameter extrudates. In U.S. Patent No. 3,539,306, an aluminum hydroxide, aluminum-amino acid salt, aluminum alcoholate, water soluble aluminate, aluminum nitrate and/or aluminum sulfate are mixed together with a carbonate ion-containing compound and magnesium component selected from magnesium oxide, magnesium hydroxide or water-soluble magnesium salt in an aqueous medium maintained at a pH of 8 or more. The resulting product is used as a stomach antacid according to that reference. In Misra Reissue U.S. Patent No. 34,164, the disclosure of which is fully incorporated by reference herein, yet another method for synthesizing hydrotalcite is disclosed. The method comprises heating magnesium carbonate and/or magnesium hydroxide to form activated magnesia, then combining the latter with an aqueous solution of aluminate, carbonate and hydroxyl ions.

Another known method for synthesizing hydrotalcite adds dry ice or ammonium carbonate to a magnesium oxide and alpha alumina mixture. Yet another process, described in The American Mineralogist, Vol. 52, pp. 1036-1047 (1967), produces hydrotalcite-like materials by titrating $MgCl_2$ and $AlCl_3$ with a carbon dioxide-free NaOH system. The resulting suspension is dialyzed for 30 days at 60°C. to form a hydrated Mg-Al carbonate hydroxide with both hydrotalcite and manasseite properties.

In preferred embodiments of this invention, caustic solutions may be treated by contact with a substance consisting essentially of calcined or activated hydrotalcite. By use of the term "consisting essentially", it is meant that any contacting adsorbent should contain greater than 85 or 90% activated hydrotalcite, and more preferably about 95 to 98%.

In its fully dehydrated state, calcined hydrotalcite is believed to have the formula: $Mg_6Al_2O_8(OH)_2$. when only partially activated or calcined, hydrotalcite contains more water ions. In alternative embodiments, a granular calcined hydrotalcite may be used, said granular form being made by combining hydrotalcite powders with about 10 to 35% of one or more binder materials.

The activation or heat treatment of hydrotalcite to form calcined variants may be carried out in any conventional or newly-developed medium maintained at temperatures between about 400 - 650°C. Preferred activation/calcination temperatures, between about 425-550 or 600°C., generally maximize surface area and pore volumes for this compound.

After thermal activation, a substance having a porous, skeletal structure is produced from which most if not all water and carbonate ions have been expelled. This product has: an average pore diameter of about 55 angstroms; a skeletal (or solid component) density of about 2.9 $g/cm^3$; and total pore volume of about 0.3 $cm^3/g$. The specific surface areas of hydrotalcite are also known to increase from about 20 $m^2/g$ to between about 50-200 $m^2/g$ (as determined by BET nitrogen adsorption) after such thermal activation.

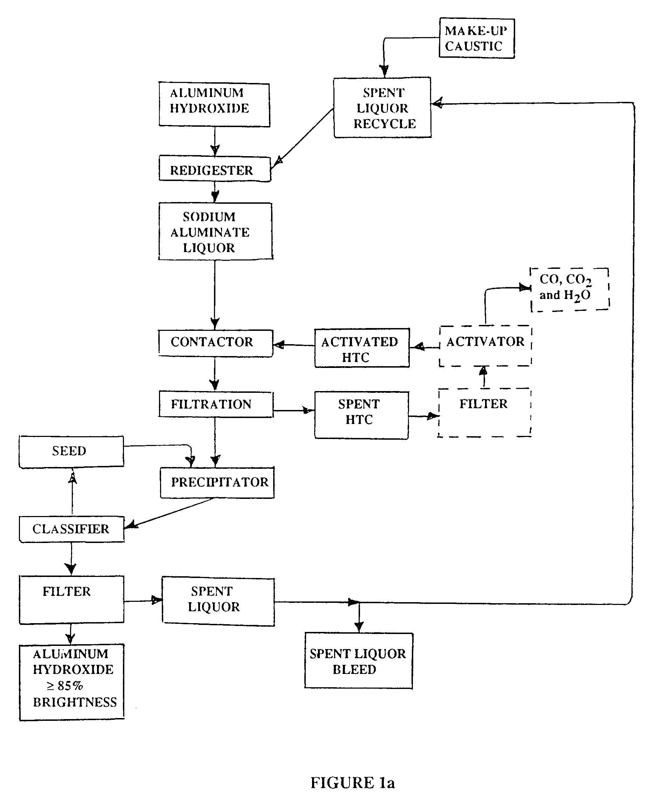

In a first embodiment of this invention, FIGURE 1a, aluminum hydroxide of improved whiteness/brightness is made by contacting a hydroxide-containing solution with a substance consisting essentially of: calcined hydrotalcite, pyroaurite, takovite, or mixtures thereof. Contacted substance is then separated from this solution for preferably recalcining and recycle. Such recalcining and recycle are optional and may not be necessary if adsorbent dosages are low. An aluminum hydroxide seed of high whiteness, 85% or higher, is then used as seed stock for causing a purer aluminum hydroxide to start precipitating from the solution, typically at one or more temperatures between about 60 - 85°C. (140-185°F.). After start-up, the high brightness level of this product can be maintained by recycling classified seed from the precipitation stream.

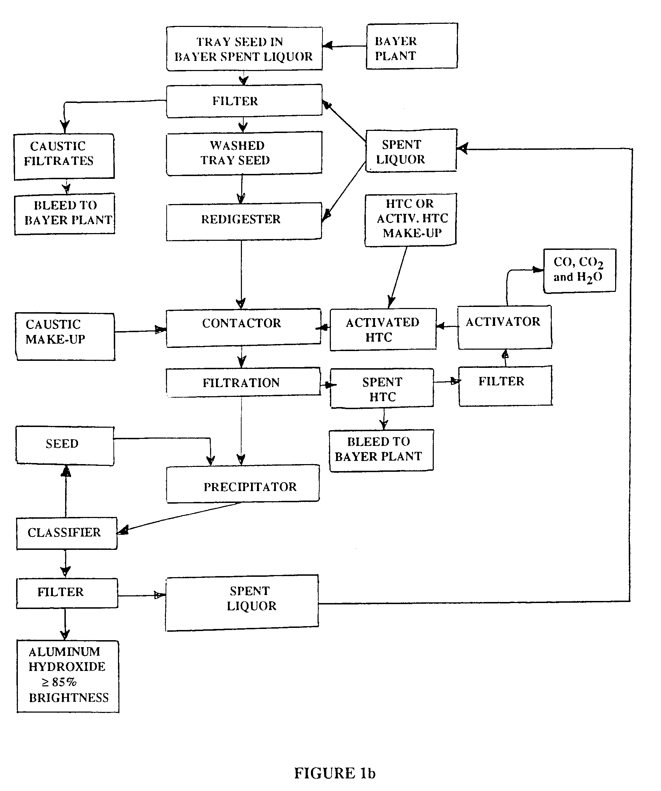

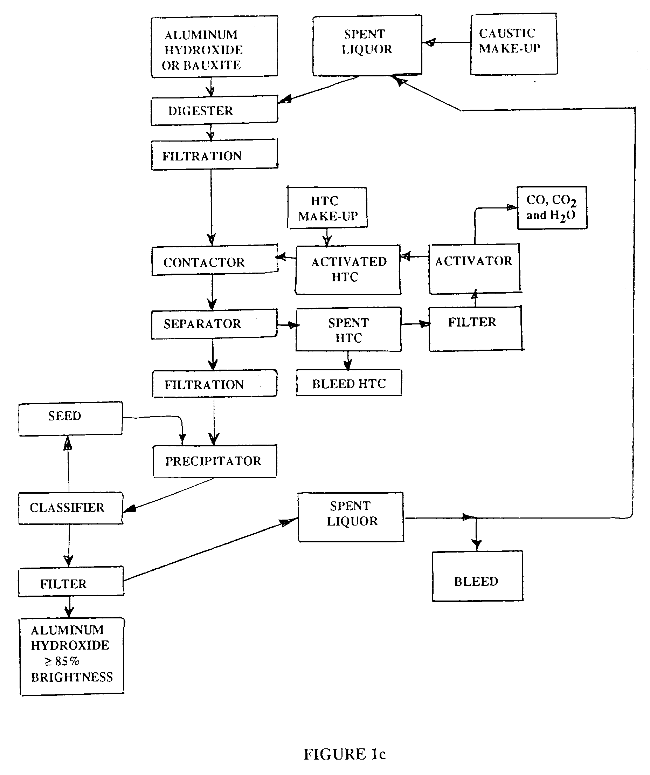

In a second embodiment, per FIGURE 1b, color contaminant levels of an aluminate solution are lowered by prewashing tray seed to remove Bayer liquor, therefrom. The tray seed is then redigested and the resultant sodium aluminate liquor contacted with the calcined form of an adsorbent having the formula: $A_6B(OH)_{16}C \cdot 4H_2O$, wherein A is selected from the group consisting of: $Mg^{2+}$, $Ni^{2+}$, $Fe^{2+}$, $Ca^{2+}$ and $Zn^{2+}$; B from: $Al^{3+}$, $Fe^{3+}$ and $Cr^{3+}$; and C from: $OH^-$, $Cl^-$, $Br^-$, $NO_3^-$, $CH_3COO^-$, $C_2O_4^{2-}$, $CO_3^{2-}$, $SO_4^{2-}$, $PO_4^{3-}$, $Fe(CN)_6^{3-}$ and $Fe(CN)_6^{4-}$ with $\frac{1}{2} \leq z \leq 2$. Contacted or spent adsorbent is then separated from the solution to precipitate a whiter aluminum hydroxide product.

In preferred embodiments, powdered forms of calcined hydrotalcite are added directly to the caustic solution (or liquor) being treated. The amount of adsorbent to be added may be determined by testing representative samples so as to avoid underdosing or, more importantly, wasteful overdosing. With the added filtration step, or steps, of this invention, significantly lower dosages of activated hydrotalcite (as compared with the prior art) will achieve higher whiteness levels than realized with prior known method. On a preferred basis, dosages of 1.0 g/l or less have proven satisfactory with prefiltering though lesser amounts of about 0.5 g/l, 0.2 g/1 or even 0.1 g/l have also removed sufficient amounts of colorants/contaminants. While total contact times may vary from several minutes to one hour or more, current data shows that total treatment times of about 15 minutes or less accomplish sufficient colorant removal according to this embodiment of the present invention.

Saturated, spent, or contacted adsorbent is typically removed from caustic liquors by known or subsequently-developed techniques including filtration, using a primary separator, gravity settling and/or centrifugation. On a preferred basis, a pressure filter is used. When activated hydrotalcite contact and settling is followed by another filtration step (per FIGURE 1c), even greater levels of hydrate brightness may be achieved. Such post-contact filtering is believed to remove from solution most unactivated forms of hydrotalcite which may have formed during treatment together with any organics that are adsorbed or don't otherwise resolubilize.

When calcined hydrotalcite powders are combined with one or more binders before being extruded, formed or otherwise shaped into large particle sizes, such particles can then be loaded into columns, fluidized beds or other containment means through which solution may be passed. A third contacting alternative exposes caustic solutions to a semi-solid sludge, or slurry, of calcined hydrotalcite. This treatment form is especially good at removing such representative contaminants as $NaFeO_2$, $FeOOH$, $Fe_2O_3$ and even certain humic acids.

Filtration only after solution contact with a substance consisting essentially of: calcined hydrotalcite, pyroaurite, takovite, or mixtures thereof will also result in an aluminum hydroxide of improved whiteness/brightness, though on a less preferred basis. The contacted adsorbent separated from this solution is preferably recalcined and recycled into a continuous or semi-continuous process for enhanced cost efficiencies.

The method of this invention is generally receptive to adsorbing electronegative or anionic colorants which are divalent, trivalent or higher in charge. Calcined hydrotalcite may also remove monovalent contaminants from solution though on a less preferred basis. Without being limited as to any particular theory of operation, it is believed that preferred embodiments proceed as follows. Upon calcination (or activation), both carbonate and water are expelled from hydrotalcite's basic structure according to the formula:

$$Mg_6Al_2OH_{16}CO_3 \cdot 4H_2O \rightarrow Mg_6Al_2O_8(OH)_2 + CO_2 + 11H_2O$$

Contact with an anionic or electronegative contaminant then causes said colorants to occupy vacated anion positions in the calcined product during solution contact and rehydration. For some contaminants, it is believed that a tricalcium aluminate intermediate forms upon hydrate redigestion. This intermediate then attracts hydrophobic, high molecular weight, organic colored molecules which are removed together through post-contact filtering practices.

EXAMPLES

For the atmospheric examples described below, a concentrated synthetic sodium aluminate liquor was prepared as follows: 536 grams of NaOH pellets were added with overhead stirring to 1484 grams of deionized water in a stainless steel beaker. Using a hot plate, the solution temperature was raised from 18°C. to 88°C. and the NaOH was allowed to dissolve. 724 grams of A-30 hydrate (65.0% brightness) was added to this solution and stirred. The combined solution was allowed to evaporate down before additional deionized water was added. This solution was then filtered for 45 minutes with #40 paper, measured for specific gravity and refrigerated. The target was 352 g/l Total Caustic (T/C) as $Na_2CO_3$, an alumina to caustic ratio of 0.667, 235 g/l of $Al_2O_3$ and a specific gravity of 1.372.

TABLE 1

| INITIAL WHITENESS LEVELS | | | |
|---|---|---|---|
| | % Brightness Readings | % Brightness | |
| | | Average | Standard Dev. |
| Sample hydrate, as-received | 65.1 | 65.0 | 0.208 |
| | 64.8 | | |
| | 65.2 | | |
| C-30 seed material, as-received | 76.5 | 76.8 | 0.300 |
| | 76.8 | | |
| | 77.1 | | |
| Sample hydrate, once filtered | 83.9 | 83.5 | 0.566 |
| | 83.1 | | |
| Sample hydrate, treated w/4 g/l of Active HTC for 45 min and filtered | 91.4 | 90.8 | 0.557 |
| | 90.7 | | |
| | 90.3 | | |
| C-31 seed material, as received | 96.7 | 96.6 | 0.058 |
| | 96.6 | | |
| | 96.7 | | |

The following control conditions were then maintained for many of the tests described below:

Seed: 50 g/l of C-30 hydrate (76.8% whiteness) screened to 200/325 mesh

Hydrotalcite: Laboratory activated at 550°C. for 80 minutes

Digested hydrate liquor temperature when treated with Activ. HTC: 95°C.

Synthetic Liquor: Total Caustic = 175 g/l as $Na_2CO_3$; AC ratio = 0.6; Spec. gravity = 1.191

Precipitation conditions: 74°C. water bath for 24 hours

Using a liquor prepared under atmospheric conditions, the following matrix of tests was performed:

Test 1: Control Sample - No filtering and no Activ. HTC addition
Test 2: Only 1 Filtration Step performed
Test 3: Only treatment with Activ. HTC
Test 4: Treatment with Activ. HTC and Filtering thereafter
Test 5: Only 1 Filtration Step performed (as a repeat or check sample
Test 6: Two Filtration Steps performed
Test 7: Prefiltering before Treatment with Activ. HTC; and
Test 8: Prefiltering, Treatment with Activ. HTC and Post-filtering

This matrix of tests resulted in the following % brightness and absorbance measurements:

TABLE 2

| | ATMOSPHERIC TESTS | | | | |
|---|---|---|---|---|---|
| Test No. | Prefiltered | 0.2 g/l of Activ. HTC for 15 min | Post-filtered | Hydrate Color by Absorbance | % Brightness |
| 1 | No | No | No | 0.101 | 82.7 |
| 2 | No | No | Yes | 0.129 | 91.8 |
| 3 | No | Yes | No | 0.072 | 84.6 |
| 4 | No | Yes | Yes | 0.175 | 93.5 |
| 5 | Yes | No | No | 0.123 | 92.3 |
| 6 | Yes | No | Yes | 0.109 | 92.8 |
| 7 | Yes | Yes | No | 0.161 | 91.4 |
| 8 | Yes | Yes | Yes | 0.128 | 94.0 |
| These % brightness values are summarized graphically at FIGURE 2a. | | | | | |

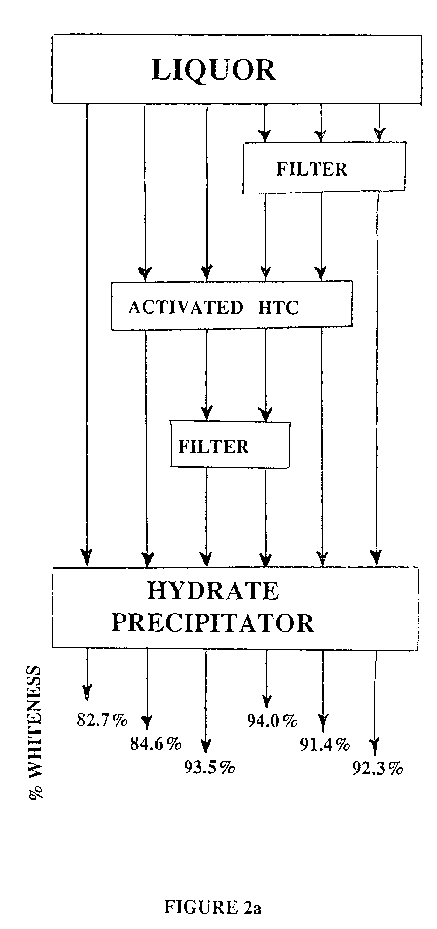

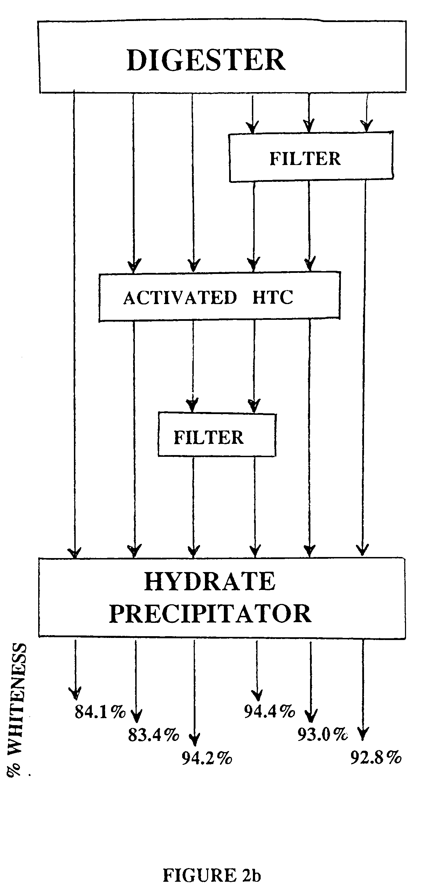

A second matrix of tests was performed on a caustic solution that was bomb digested in a Parr reactor at 143°C. for 30 minutes in order to rapidly and completely redissolve alumina in caustic and simulate plant digester conditions which may chemically change some of the organic colorants present. This resulted in the following absorbance and % brightness levels, the latter of which are graphically summarized at FIGURE 2b.

TABLE 3

| | BOMB DIGESTED | | | | |
|---|---|---|---|---|---|
| Test No. | Prefiltered | 0.2 g/l of Activ. HTC for 15 min | Post-filtered | Hydrate Color by Absorbance | % Brightness |
| 1 | No | No | No | 0.062 | 84.1 |
| 2 | No | No | Yes | 0.130 | 93.3 |
| 3 | No | Yes | No | 0.054 | 83.4 |
| 4 | No | Yes | Yes | 0.061 | 94.2 |
| 5 | Yes | No | No | 0.120 | 92.8 |
| 6 | Yes | No | Yes | 0.068 | 94.2 |
| 7 | Yes | Yes | No | 0.047 | 93.0 |
| 8 | Yes | Yes | Yes | 0.039 | 94.4 |
| The overall effect on % whiteness improvement by combining filtering steps with activated hydrotalcite contact is shown at FIGURE 3. | | | | | |

A series of tests were then performed using various adsorbent exposure times and dosages (with both pre- and -post filtering) resulting in the following brightness data:

TABLE 4

| DOSAGES & TREATMENT TIMES | | | |
|---|---|---|---|
| Run # | Dose of Activ. HTC (g/l) | Treatment Time (min.) | % Brightness |
| 1 | 0 | 0 | 85.0 |
| 2 | 0.1 | 7.5 | 88.9 |
| 3 | 0.1 | 15 | 89.2 |
| 4 | 0.2 | 7.5 | 88.3 |
| 5 | 0.2 | 15 | 87.0 |
| 6 | 0.2 | 30 | 88.5 |
| 7 | 0.33 | 15 | 88.1 |
| 8(a) | 0.33 | 30 | 90.8 |
| 8(b) | 0.33 | 30 | 90.2 |
| 9 | 0.33 | 60 | 88.1 |
| 10 | 1.0 | 30 | 89.4 |
| 11 | 1.0 | 60 | 89.5 |
| 12 | 2.5 | 30 | 90.2 |
| 13 | 2.5 | 60 | 89.3 |
| 14 | 5.0 | 30 | 92.7 |
| 15 | 5.0 | 60 | 89.2 |

A series of tests was also run to determine the recyclability of activated hydrotalcite in this method. Each cycle of a four cycle test used a fresh supply of redigested hydrate liquor. Synthetic caustic liquor was exposed for 15 minutes to 0.33 g/l of adsorbent for the first cycle and to the cumulative filtered solids described below (which included reactivated hydrotalcite in the second through fourth cycles). Contacted solids were filtered off, dried overnight and reactivated at 550°C. for 80 minutes. In the second through fourth cycles, both C-30 and C-31 hydrates were used as seed material for comparative purposes.

TABLE 5

| RECYCLING ACTIV. HTC | | | |
|---|---|---|---|
| | C-30 Seed* | C-31 Seed* | Added Charge of Activ. HTC & other additives (g/l) |
| Starting Hydrate | 0.466 | --- | --- |
| Reprecipitated | 0.171 | --- | --- |
| Cycle 1 | 0.135 | --- | 0.33 |
| Cycle 2 | 0.144 | 0.024 | 0.47 |
| Cycle 3 | 0.141 | 0.026 | 0.75 |
| Cycle 4 | 0.147 | 0.040 | 0.79 |

*The absorbance and brightness of these starting seed samples were 0.346 and 76.8% for C-30 and 0.007 and 96.6% for C-31.

From the foregoing data, the thermal regeneration and reuse of activated hydrotalcite over 4 cycles resulted in less than a 10% decline in overall color removal effectiveness.

Having described the presently preferred embodiments, it is to be understood that the invention may be otherwise embodied within the scope of the appended claims.

**Claims**

1. A method for improving the brightness level of aluminum hydroxide removed from a caustic solution or a solution of sodium aluminate, said method comprising the steps of:

   (a) contacting the solution with an adsorbent consisting essentially of a calcined compound having the formula $A_6B_2(OH)_{16}C_z \cdot 4H_2O$ wherein A is selected from the group consisting of: $Mg^{2+}$, $Ni^{2+}$, $Fe^{2+}$, $Ca^{2+}$ and $Zn^{2+}$; B is selected from the group consisting of: $Al^{3+}$, $Fe^{3+}$ and $Cu^{3+}$; C is selected from the group consisting of: $OH^-$, $Cl^-$, $Br^-$, $NO_3^-$, $CH_3COO^-$, $C_2O_4^{2-}$, $CO_3^{2-}$, $SO_4^{2-}$, $PO_4^{3-}$, $Fe(CN)_6^{3-}$ and $Fe(CN)_6^{4-}$; and $\frac{1}{2} \leq z \leq 2$; and
   (b) filtering the solution before and/or after said contacting.

2. The method of claim 1, which further includes:

   (c) adding to the solution as seed material an aluminum hydroxide with a whiteness level of about 85% or higher based on a 100% $TiO_2$ reference standard.

3. The method of claim 1 or 2, which further includes:

   (d) separating calcined compound from the solution;
   (e) recalcining the separated compound; and
   (f) recycling the recalcined compound into additional solution.

4. The method of claim 1 or 2, wherein step (a) comprises: contacting the solution with about 1.0 g/l or less of activated hydrotalcite.

5. The method of claim 4, which includes contacting the solution with about 0.3 g/l or less of activated hydrotalcite.

6. The method of any one of claims 1 to 5, wherein the solution contains solutes consisting of sodium hydroxide, sodium carbonate or sodium aluminate, or mixtures thereof.

7. The method of claim 1, which further includes recycling calcined compound into additional solution.

8. An improved aluminum hydroxide product having a whiteness level of about 85% or higher based on a 100% $TiO_2$ reference standard, said product having been removed from a caustic solution and decolorized by a method comprising the steps of:

   (a) contacting the solution with a calcined compound having the formula $A_6B_2(OH)_{16}C_z \cdot 4H_2O$ wherein A is selected from the group consisting of: $Mg^{2+}$, $Ni^{2+}$, $Fe^{2+}$, $Ca^{2+}$ and $Zn^{2+}$; B is selected from the group consisting of: $Al^{3+}$, $Fe^{3+}$ and $Cu^{3+}$; C is selected from the group consisting of: $OH^-$, $Cl^-$, $Br^-$, $NO_3^-$, $CH_3COO^-$, $C_2O_4^{2-}$, $CO_3^{2-}$, $SO_4^{2-}$, $PO_4^{3-}$, $Fe(CN)_6^{3-}$ and $Fe(CN)_6^{4-}$; and $\frac{1}{2} \leq z \leq 2$;
   (b) filtering the solution to remove contacted calcined compound and contaminants therefrom; said filtering being performed (i) prior to step (a); (ii) after step (a); or (iii) before and after step (a); and
   (c) adding to the solution as seed material an aluminum hydroxide with a whiteness level of about 85% or higher based on a 100% $TiO_2$ reference standard.

FIGURE 1a

FIGURE 1b

FIGURE 1c

FIGURE 2a

FIGURE 2b

FIGURE 3

**European Patent Office**

## EUROPEAN SEARCH REPORT

Application Number

EP 94 11 8571

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|----------|------------------------------------------------------------------------------|-------------------|----------------------------------------------|
| A,D | US-A-5 068 095 (NIGRO ET AL)<br>* claim 1 *<br>--- | 1 | C01F7/47 |
| A,D | US-A-4 915 930 (GOHEEN ET AL)<br>* claim 1 *<br>----- | 1 | |
| | | | **TECHNICAL FIELDS SEARCHED** (Int.Cl.6)<br><br>C01F |

The present search report has been drawn up for all claims

| Place of search | Date of completion of the search | Examiner |
|-----------------|----------------------------------|----------|
| BERLIN | 28 April 1995 | Clement, J-P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)